# EUROPÄISCHE PATENTSCHRIFT

(11) **EP 2 018 256 B1**
(45) Veröffentlichungstag und Bekanntmachung des Hinweises auf die Patenterteilung: **01.09.2010**
(21) Anmeldenummer: 07724707.0
(22) Anmeldetag: 27.04.2007
(51) Int. Cl.: B29B 9/06, B29C 44/34

(54) **VORRICHTUNG UND VERFAHREN ZUR ERZEUGUNG EINES GRANULATS AUS EINER KUNSTSTOFFSCHMELZE**
DEVICE AND METHOD FOR PRODUCING GRANULES FROM A POLYMER MELT
PROCÉDÉ ET DISPOSITIF POUR L'OBTENTION D'UN GRANULAT A PARTIR D'UNE MASSE FONDUE DE MATIÈRE PLASTIQUE

(30) Priorität: 15.05.2006 DE 102006022555
(43) Veröffentlichungstag der Anmeldung: 28.01.2009
(73) Patentinhaber: Automatik Plastics Machinery GmbH, 63762 Grossostheim (DE)
(72) Erfinder: MÜRB, Reinhardt-Karsten, 63743 Aschaffenburg (DE)
(74) Vertreter: Bardehle, Heinz
(86) Internationale Anmeldenummer: PCT/EP2007/003780
(87) Internationale Veröffentlichungsnummer: WO 2007/131613

(56) Entgegenhaltungen:
- EP-A- 1 621 310
- EP-A1- 0 249 157
- EP-A2- 1 522 395
- DE-A1- 4 337 205

## Beschreibung

Die Erfindung betrifft eine Vorrichtung zur Erzeugung eines Granulats aus einer Kunststoffschmelze gemäß dem Oberbegriff des Anspruchs 1, ein entsprechendes Verfahren gemäß dem Oberbegriff des Anspruchs 11 sowie eine Verwendung gemäß Anspruch 13.

Ein Anwendungsgebiet der Erzeugung von Granulat aus schmelzflüssigen Kunststoffen durch Extrusion gemäß der Erfindung betrifft zum Beispiel die Verwendung eines Unterwasser-Heißabschlagverfahrens, ist aber nicht darauf beschränkt.

Ein Anwendungsgebiet der Erzeugung von Granulat aus schmelzflüssigen Kunststoffen durch Extrusion gemäß der Erfindung ist auch beispielsweise das Erzeugen von Granulatkömem durch Vertropfen von schmelzflüssigen Kunststoffen, wobei eine Prozesskammer mit unter Druck stehendem Gas gefüllt ist und im unteren Bereich ein, die Granulatkörner auffangendes Flüssigkeitsbad aufweist mit einem unter Druck stehenden Prozessfluid. Es wird eine Schmelze aus Kunststoffmaterial durch eine Lochplatte im oberen Bereich der Prozesskammer gedrückt, woraufhin die austretenden, quasi "extrudierten" Stränge der Kunststoffschmelze unter Einfluss von Oberflächenspannung und/oder durch einwirkende Schwingungen oder sonstige Spannungen gleichsam entsprechend wie in einer Zerteilungsvorrichtung in eine Kette von Tropfen zerfallen, welche sich unter Einwirkung des Gases, welches auch als Kühlung dienen kann, und/oder durch Eintauchen in das Prozessfluid durch Abkühlen oder andere Reaktionen verfestigen. Beim Unterwasser-Heißabschlag wird eine Kunststoffschmelze durch eine mit Löchern versehene Platte, eine sog. Lochplatte, gepresst. Typischer Weise sind die Löcher dabei in einem oder mehreren Lochkreisen oder in einem ringförmigen Muster angeordnet, wobei der jeweilige Mittelpunkt auf einer Linie mit einer Antriebsachse einer Messeranordnung einer Zerteilungsvorrichtung liegt. Die austretenden Kunststoffstränge werden durch die mehr oder weniger direkt auf der Oberfläche der Lochplatte laufende Messeranordnung in kleine Stücke zerteilt. Diese Stücke werden dann durch ein Prozessfluid, meist Prozesswasser, welches mit den Messern herangeführt wird, vom Ort der Erzeugung in einer Prozesskammer davon entfernt, wobei eine intensive Kühlung und somit eine Verfestigung der zerteilten Stücke vonstatten geht. Das solchermaßen, beispielsweise durch Unterwasser-Heißabschlag oder Vertropfung, erzeugte Granulat wird über das Prozessfluid aus der Prozesskammer heraustransportiert und üblicher Weise durch Rohrleitungen einer Abscheidevorrichtung zugeführt, in welcher bei hinreichender Verweilzeit das Granulat vom Prozessfluid abgetrennt wird und in der Folge einer Trocknungseinheit zugeführt wird.

Üblicher Weise entsteht durch die Geometrie des Zu- und Ablaufs Prozessfluid zu der Prozesskammer und/oder durch die Messeranordnung und durch die Welle, welche die Messeranordnung bewegt, im Gehäuse einer entsprechenden Vorrichtung normaler Weise ein koaxialer Wirbel, insbesondere um die Drehachse der Messeranordnung, also die Welle, wobei im Zentrum dieses Wirbels ein Gebiet verminderten Drucks liegt. Unterschreitet dabei der Zentraldruck einen kritischen Wert, der auch von anderen Prozessparametern abhängt, kann es zu Ausgasungen und Dampfbildung des Prozessfluids kommen, wodurch aufgrund entsprechender Dampfblasen erheblich verringerte Transport- und Kühleigenschaften des Prozessfluids auftreten. Dies verschlechtert den zuverlässigen Betrieb einer Unterwasser-Heißabschlagsanlage oder einer Vertropfungsanlage des Standes der Technik deutlich. Außerdem kann es, im Falle, dass eine Dampfblase direkt an der Lochplatte auftritt, aufgrund der dadurch herabgesetzten Kühlung zu Verklumpung und Verklebungen der Lochkreisöffnungen durch die Kunststoffschmelze kommen, was im schlimmsten Falle zum vollständigen Erliegen der Herstellung von Kunststoffgranulat führten kann.

Man kann nun beispielsweise durch Verringerung des Querschnitts von Rohrleitungen in der Zu- und Ableitung des Prozessfluids zu und von der Prozesskammer oder durch Ausnutzung einer bestimmten geodätischen Höhe einer Säule des Prozessfluids durch entsprechende Anordnung der Vorrichtung einen höheren Gegendruck des Prozessfluids in der Prozesskammer erzeugen, was der Unterdruck - und im schlimmsten Fall der Dampfblasenbildung im Prozessfluid dort entgegenwirkt, jedoch ergeben sich aus solchen Lösungen des Standes der Technik andere gravierende Nachteile. So können sich insbesondere bei Rohrleitungen mit geringem Querschnitt, besonders zu Beginn eines Produktionslaufs Agglomerate von Granulatkörnern bilden, da die für einen reibungslosen Betriebsablauf erforderlichen Prozessparameter nicht sofort beim Anlaufen der Vorrichtung erreicht werden können. Solche Agglomerate führen leicht zu Verstopfungen der abführenden Leitung und können somit den Produktionsprozess vollständig zum Erliegen bringen. In der Praxis hat sich gezeigt, dass je nach Granulat, Anlagengröße und Art des zu verarbeitenden Kunststoffmaterials ein Leitungsinnendurchmesser von 25 bis 40 mm nicht unterschritten werden soll. Verwendet man ausreichend weite und/oder besonders lange Rohrleitungen (z.B. zur Ausnutzung einer bestimmten geodätischen Höhe einer Säule des Prozessfluids), so kann dies wiederum den Nachteil haben, dass die Verweilzeit des Granulats im Prozessfluid entsprechend zunimmt und somit unter Umständen eine zu große Kühlwirkung auftritt. Damit wird unerwünschter Weise verhindert, dass die Eigenwärme des Granulats zum Trocknen desselben benutzt werden kann, so dass die zum Trocknen benötigte Energie zusätzlich unter entsprechenden Kosten zugeführt werden muss. Zudem werden so bei einigen Kunststoffmaterialien gewünschte Kristallisationsvorgänge unterdrückt, was zusätzliche Prozessschritte nach sich zieht und einen erheblichen weiteren apparativen und finanziellen Aufwand erforderlich macht.

Würde man einfach den Strom des Prozessfluids, d.h. dessen Strömungsgeschwindigkeit, erhöhen, würde zwar die Verweilzeit herabgesetzt werden, diese Maßnahme würde jedoch wiederum das Entstehen der o.g. Zentralblase nach sich ziehen, da die Umlaufgeschwindigkeit des Prozessfluids in einem Wirbel etwa quadratisch in den entstehenden Unterdruck im Zentrum eingeht, wobei die Zentralblase entstehen kann. Der Einfluss der Strömungsgeschwindigkeit des Prozessfluids wird durch die Drehzahl der Messer einer Zerteilungsvorrichtung noch verstärkt.

Die im Stand der Technik bereits lokal begrenzt eingesetzten Quetschventile, welche durch lokal begrenzte Verringerung des Querschnitts in der Ableitung eine hinreichende Druckerhöhung bewirken können, wenn die lichte Weite des Quetschspalts in oder unter der Größenordnung des erzeugten Granulatdurchmessers liegt, bergen dabei jedoch die große Gefahr bzw. führen in jedem Fall zu einer Verstopfung der Ableitung, was selbstverständlich nicht wünschenswert ist.

Eine weitere Verwendung für eine Vorrichtung oder ein Verfahren zur Erzeugung eines Granulats aus einer Kunststoffschmelze durch Extrusion gemäß der Erfindung betrifft Anlagen, bei welchen Kunststoffschmelzen verarbeitet werden, welche Stoffe enthalten, die bei den während des Austritts aus den Löchern der Lochplatte vorliegenden Bedingungen aus der Kunststoffschmelze ausgasen würden, falls der Umgebungsdruck nicht hoch genug liegt. Bei solchen Schmelzebegleitstoffen kann es sich im einfachsten Fall um Wasser handeln, welches in dem Kunststoffmaterial enthalten sein kann, es können jedoch auch funktionale Stoffe sein, wie etwa Brandschutzmittel, Treibmittel für aufschäumbare Kunststoffe oder erwünschte oder unerwünschte Reaktionsprodukte der Kunststoffschmelze selbst. Durch eine erforderliche Erhöhung des Drucks in der Prozesskammer und dem darauf folgenden Rohrableitungssystem bleiben solche Stoffe in der Kunststoffschmelze gelöst, bis diese durch die aufgrund des Prozessfluids eintretende Kühlwirkung soweit erstarrt ist, dass ein Ausgasen und somit Auftreiben des erzeugten Kunststoffschmelze-Granulats wirksam unterdrückt wird.

Aus dem Dokument EP 1 522 395 A2 ist ein Verfahren und eine Vorrichtung zur thermischen Kristallisation eines geschmolzenen Polyesterpolymers in einem Fluid bekannt. Dabei werden durch eine Zerteilungsvorrichtung zerteilte aus einer Lochplatte extrudierte Stränge der entsprechenden. Kunststoffschmelze in einzelne Granulatkörner zerteilt, welche in einem unter Druck stehenden Prozessfluid für eine gewisse Zeit verbleiben, wobei die Granulatkörner über eine Abscheidevorrichtung von dem unter Druck stehenden Prozessfluid abgeschieden werden.

Es ist somit eine Aufgabe der vorliegenden Erfindung, eine Vorrichtung, ein Verfahren sowie eine entsprechende Verwendung zur Erzeugung eines Granulats aus einer Kunststoffschmelze vorzusehen, welche(s) die Nachteile des Standes der Technik überwindet und insbesondere eine Vorrichtung, ein Verfahren und eine Verwendung vorzusehen, welche(s) auf verhältnismäßig einfache, energiesparende und somit kostengünstige Art und Weise eine unter im Wesentlichen allen Betriebsbedingungen sichere und zuverlässige Granulaterzeugung ermöglicht.

Die erfindungsgemäße Aufgabe wird gelöst mit einer Vorrichtung mit den Merkmalen gemäß Anspruch 1, mit einem Verfahren mit den Merkmalen gemäß Anspruch 11 sowie einer Verwendung mit den Merkmalen gemäß Anspruch 13. Weitere Ausführungsformen der Erfindung sind in den jeweiligen Unteransprüchen definiert.

Die erfindungsgemäße Vorrichtung zur Erzeugung eines Granulats aus einer Kunststoffschmelze durch Extrusion weist auf eine Lochplatte, aus welcher die Kunststoffschmelze mit einem über den Umgebungsdruck liegenden Druck extrudiert wird, eine Prozesskammer, in welcher die Kunststoffschmelze extrudiert wird, eine Zerteilungsvorrichtung zur Zerteilung von aus der Lochplatte extrudierten Strängen der Kunststoffschmelze in einzelne Granulatkörner, weil die Prozesskammer mit einem Prozessfluid gefüllt ist und eine Fördereinrichtung, welche das Prozessfluid mit einem über dem Umgebungsdruck liegenden Druck in die Prozesskammer zuführt, wobei stromabwärts der Prozesskammer der Druck des Prozessfluids mit den darin enthaltenen Granulatkörner abgebaut wird. Entgegen der Vorrichtung, welche beispielsweise aus der oben genannten EP 1 522 395 A2 bekannt ist, soll erfindungsgemäß also der Druck des Prozessfluids zusammen mit den darin enthaltenen Granulatkörnern abgebaut werden und nicht, wie dort beschrieben, zunächst der Druck des Prozessfluids an sich, worauf dann erst im Folgenden die Granulatkörner aus dem System abgezogen werden. Erfindungsgemäß vorgesehen ist ferner ein stromabwärts der Prozesskammer vorgesehener Energiewandler, welcher dem Prozessfluid mit den darin enthaltenen Granulatkörnern zumindest teilweise seine Druckenergie entzieht, dabei den Druck des Prozessfluids mit den darin enthaltenen Granulatkömem abbaut und dabei die entzogene Energie zumindest teilweise in eine weiter nutzbare Energieform umwandelt. Ein Anwendungsgebiet der Erzeugung von Granulat aus schmelzflüssigen Kunststoffen durch Extrusion gemäß der Erfindung betrifft zum Beispiel die Verwendung eines Unterwasser-Heißabschlagverfahrens oder auch beispielsweise das Erzeugen von Granulatkörnern durch Vertropfen von schmelzflüssigen Kunststoffen.

Die Erfindung beruht dabei insbesondere auf der folgenden Überlegung, dass auch Druck eine bestimmte Energieform wiederspiegelt, wobei sich die in einem Volumenelement V, welches unter einem Druck p steht, enthaltene Energie E berechnet als E = p x V. Erfindungsgemäß wird nun diese Druckenergie über den erfindungsgemäßen Energiewandler zumindest teilweise entzogen und in eine andere, weiter nutzbare Energieform umgewandelt. Entgegen dem oben beschriebenen Stand der Technik ist es somit durch die Verwendung des erfindungsgemäßen Energiewandlers möglich, auf einfache und kostengünstige Art und Weise eine sichere und unter allen Betriebsbedingungen zuverlässige Granulaterzeugung zu ermöglichen, insbesondere kann immer ein ausreichender Druck bereitgestellt werden, wobei trotzdem erfindungsgemäß die entzogene Energie stromabwärts einer Prozesskammer zumindest teilweise aktiv in eine weiter nutzbare Energieform umgewandelt wird bzw. umwandelbar ist.

Eine Gegendruckerzeugung gemäß dem Stand der Technik, wie sie weiter oben beschrieben wurde, nämlich beispielsweise durch Verwendung von verengten Rohrleitungsquerschnitten, lokalen Verengungen in Form von Düsen oder durch geodätische Höhenunterschiede in einem System, welche einen Fluidsäulendruck erzeugen, sind demgegenüber, wie oben erläutert, zum einen passiv, d.h. schwer bzw. gar nicht auf unterschiedliche Prozessparameter einstellbar und sie sind außerdem nicht unter allen Betriebszuständen weitestgehend betriebssicher. Ferner sind die Lösungen des Standes der Technik, beispielsweise unterschiedliche geodätische Höhen der Elemente eines Systems, teilweise nur mit sehr hohem baulichem Aufwand zu verwirklichen. Demgegenüber bietet die erfindungsgemäße Vorrichtung alle oben beschriebenen Vorteile, da durch den erfindungsgemäßen Energiewandler aktiv die Druckenergie abbaubar ist und in eine weiter nutzbare Energieform umwandelbar ist.

Besonders vorteilhaft ist als weiter nutzbare Energieform die Impulsenergie.

Der erfindungsgemäße Energiewandler kann beispielsweise eine Turbine sein. Eine Turbine ist allgemein definitionsgemäß eine Strömungskraftmaschine, welche aus der Bewegungs- und Druckenergie einer Fluidströmung mechanisch nutzbare Energie, z.B. in Form von Drehmoment, gewinnt. Das Gegenstück dazu stellen allgemein z.B. Kolben- oder Verdrängerkraftmaschinen dar, wie etwa Antriebszylinder von Dampfmaschinen, wo die Bewegungsenergie der Fluidströmung bei der Energieumwandlung nur eine untergeordnete Rolle spielt. So kann erfindungsbemäß im Falle einer Turbine die kinetische Energie des Prozessfluids dadurch aktiv in einen Drehimpuls umgewandelt werden, wobei entsprechende Leit- und Laufradschaufeln einer solchen Turbine so angeordnet sein können, dass der dem Prozessfluid mit den darin enthaltenen Granulatkörnern innewohnende Impuls in einen Drehimpuls des Laufrads übertragen wird. Das so angetriebene Laufrad der Turbine kann dann über eine Welle auf eine Antriebs- bzw. Abtriebseinheit übertragen werden, welche beispielsweise einen elektrischen Generator antreiben kann. Eine erfindungsgemäße Turbinenanordnung macht es somit auch nicht erforderlich, besonders enge Rohrleitungsquerschnitte wählen zu müssen, um einen erforderlichen Gegendruck aufzubauen.

Der erfindungsgemäße Energiewandler kann auch als Schlauchpumpe mit umgekehrter Energieflussrichtung ausgebildet sein. Allgemein werden Schlauchpum-, pen von ihrer Charakteristik her zu den Verdrängermaschinen gezählt.

Eine solche Schlauchpumpe mit umgekehrter Energieflussrichtung beruht auf dem Prinzip, dass eine flexible Schlauchleitung vollständig oder bis zu einem gewissen Teil abgequetscht wird und die Quetschstelle längs der Schlauchleitung weiter bewegt wird. In Abhängigkeit der Bewegungsgeschwindigkeit der Quetschstelle und dem sonstigen Schlauchquerschnitt wird somit ein genau vorher bestimmbarer Volumenstrom zugelassen. Durch den vor der Quetschstelle anstehenden Druck unter Verwendung der Formel Arbeit = Kraft x Weg, wobei die Arbeit einer gewissen Energiemenge entspricht, wird eine vorbestimmte Energiemenge freigesetzt. Die gleiche Betrachtung gilt, wenn statt einer linearen Bewegung der Quetschstelle eine kreisförmige Bewegung vorgesehen wird, wie sie durch eine Schlauchpumpenanordnung mit umgekehrter Energieflussrichtung erfindungsgemäß vorgesehen sein kann.

Schlauchpumpen im herkömmlichen Sinne, d.h. ohne umgekehrte Energieflussrichtung im Sinne der Erfindung, arbeiten so, dass ein Motor eine Welle antreibt, auf welcher zwei oder mehr Quetschschuhe oder Quetschrollen einen auf der Innenseite eines Zylindersegments abgestützten Schlauch zusammenquetschen, wobei der Inhalt des Schlauches durch die Drehbewegung der Welle permanent voran geschoben wird. Dabei wird zunächst die Antriebsenergie des Motors in eine Drehbewegung umgewandelt, welche wiederum das zu fördernde Medium in die Schlauchströmung versetzt mit einer gewissen Druckbeaufschlagung des zu fördernden Mediums. Erfindungsgemäß erfolgt eine Verwendung einer Schlauchpumpe hier genau umgedreht, d.h. erfindungsgemäß wird über eine Druckbeaufschlagung des Prozessfluids mit dem darin enthaltenen Granulat in der Schlauchpumpe eine entsprechende Drehbewegung veranlasst, welche an einer Abtriebswelle abgegriffen und weiter verwendet werden kann. An der Abtriebswelle kann dann beispielsweise ein Elektrogenerator angebracht werden, wobei auch, wie auch im Fall einer Turbine oder im Fall anderer denkbarer Energiewandler gemäß der Erfindung, ein Frequenz-Umrichter mit Bremswiderstand oder eine elektrische Rückspeiseeinheit zusätzlich vorgesehen sein kann.

Eine erfindungsgemäße Schlauchpumpe mit umgedrehter Energieflussrichtung ist relativ unempfindlich hinsichtlich Verstopfungen, da die lichte Weite des Schlauchs nirgendwo, außer im Bereich der sich weiter bewegenden Quetschstellen, gravierend verengt ist. Die Quetschstellen wandern dabei mit der Quetschvorrichtung entlang des Schlauchs und öffnen sich zum Ende des Förderzuflusses wieder vollständig, so dass eine Agglomeration und somit eine Verstopfung mit Granulatpartikeln aufgrund des fehlenden Anpressdrucks des Anhaftens der Partikel an dem Schlauch bzw. eine entsprechende Verkeilmöglichkeit nicht gegeben ist.

Generell kann erfindungsgemäß der Volumenstrom des Prozessfluids mit dem darin enthaltenen Granulat hinsichtlich des eingestellten Volumenstroms und hinsichtlich des so erzeugten Drucks gesteuert werden, wobei das Förderverhalten der erfindungsgemäßen Fördervorrichtung hinsichtlich des erzeugten Drucks dieses Volumenstroms ausgenutzt wird, um eine Konstanz des Energieflusses durch geeignete Einstellung des Antriebs davon zu kontrollieren.

Erfindungsgemäß kann eine Leitung für das Prozessfluid ein Dämpfungselement zum Dämpfen und Ausgleich von Pulsationen aufweisen, bevorzugt einen Windkessel aufweisen.

Der erfindungsgemäße Energiewandler kann auch eine Zahnradpumpe mit umgekehrter Energieflussrichtung sein. Dabei wird die dem Prozessfluid mit dem darin enthaltenen Granulat innewohnende Energie durch Umwandlung des entsprechenden Impulses in einen Drehimpuls in geeigneter Weise relativ einfach entnommen. Allgemein werden Zahnradpumpen von ihrer Charakteristik her zu den Verdrängermaschinen gezählt.

Generell können geeignete erfindungsgemäße Energiewandler auch von der Bauform an bekannte Kreiselpumpen, Radialpumpen, Diagonalpumpen oder Axialpumpen angelehnt sein.

Dabei kann das erfindungsgemäße Prinzip der Energieumsetzung darauf beruhen, dass das Prozessfluid mit den darin enthaltenen Granulatkörner in ein z.B. einem herkömmlichen Kreiselpumpengehäuse ähnliches Gehäuse geleitet wird, und dass das Prozessfluid dabei gegebenenfalls unter Zuhilfenahme von Leitschaufeln in einer Drehbewegung relativ zur Achse eines Laufrads versetzt wird. Damit wird die kinetische Energie des Prozessfluids mit den darin enthaltenen Granulatkörnem in einen Drehimpuls umgewandelt. Der Drehimpuls wird dann auf ein Laufrad übertragen.

Die erfindungsgemäße Vorrichtung kann stromabwärts der Prozesskammer im Wesentlichen keine stationäre Verengung eines Strömungsquerschnitts aufweisen, d.h. es liegt keine dauerhaft stationäre Verengung vor. Somit wird die zur Verfügung stehende lichte Weite zwischen entsprechenden Bauelementen stets größer sein können als eine kritische Größe von Agglomeraten, die bei bestimmten Betriebszuständen, wie etwa beim Anlaufen eines Herstellungsprozesses, auftreten können und zu erwarten sind, so dass besonders bevorzugt eine Verstopfung der Vorrichtung vermieden werden kann.

Insbesondere die Gestaltung von Gehäusen, Leitschaufeln und Laufrädern sowie von sonstigen Elementen des erfindungsgemäßen Energiewandlers, wie er oben in bevorzugten Ausführungsformen beschrieben wurde, hat Einfluss auf eine Vermeidung eines Verstopfens der Vorrichtung, wobei durch das erfindungsgemäße Vorsehen des Energiewandlers dies einfach und kostengünstig realisierbar ist im Vergleich zum Stand der Technik, wie er eingangs beschrieben wurde.

Erfindungsgemäß kann eine Rückspeisevorrichtung vorgesehen sein, mittels welcher die entzogene und umgewandelte Energie wieder zur Fördervorrichtung rückspeisbar ist. Neben einer rein elektrischen Rückspeisung kann auch eine mechanische oder hydraulische Rückspeisung erfolgen. Jedenfalls wird die Energiebilanz der Gesamtvorrichtung somit deutlich verbessert. In der theoretischen Energiebilanz ist die durch den Energiewandler entnehmbare Energie genauso groß wie die vorher zum Aufbau des Drucks durch die Fördervorrichtung benötigte Energie, weil in der Praxis aber strömungstechnische, mechanische und sonstige Verluste berücksichtigt werden müssen. Dabei ist zu bedenken, dass der Wirkungsgrad von erfindungsgemäß bevorzugt vorgesehenen Pumpen, Turbinen und entsprechenden Gerätschaften nicht bei 100 % liegt und im Übrigen auch drehzahlabhängig ist. Somit können bei der erfindungsgemäß vorgesehenen Rückspeisevorrichtung zwischengeschaltete Getriebe einen Gesamtwirkungsgrad unter Umständen beeinflussen, d.h. in gewissem Umfang gegebenenfalls verbessern oder auch verschlechtern.

Wie bereits angedeutet, kann die Rückspeisevorrichtung eine mechanische, eine elektrische, eine pneumatische oder eine hydraulische Rückspeisung oder eine Kombination davon vorsehen.

Erfindungsgemäß steht die Rückspeisevorrichtung mit dem erfindungsgemäßen Energiewandler in Verbindung, wobei wiederum die Rückspeisevorrichtung mit einer zusätzlichen weiteren Fördervorrichtung, neben der oben beschriebenen eigentlichen Fördervorrichtung, in Verbindung stehen kann, wodurch strömungstechnische und gegebenenfalls andere Verluste in der Gesamtvorrichtung ausgeglichen werden können.

Erfindungsgemäß kann ein Regelkreis vorgesehen sein, mittels welchem der Druck in der Prozesskammer so einstellbar ist, dass dieser Druck etwas oberhalb, bevorzugt knapp oberhalb, des Drucks liegt, bei dem das Prozessfluid bei der herrschenden Temperatur verdampft. Dies bietet den Vorteil, dass ein Extrudieren mit möglichst geringer Materialbelastung und somit besonders zuverlässig möglich ist, insbesondere falls leichtflüchtiges Prozessfluid Verwendung findet.

Erfindungsgemäß kann auch ein Regelkreis vorgesehen sein, insbesondere der gleiche Regelkreis der im vorhergehenden Absatz beschrieben ist, mittels welchem der Druck in der Prozesskammer so einstellbar ist, dass dieser Druck etwas oberhalb, bevorzugt knapp oberhalb, des Drucks liegt, bei dem in der Kunststoffschmelze enthaltene Schmelzebegleitstoffe bei der herrschenden Temperatur verdampfen. Dies bietet den weiteren Vorteil, dass ein Extrudieren mit möglichst geringer Materialbelastung und somit besonders zuverlässig möglich ist, insbesondere falls eine Kunststoffschmelze mit leichtflüchtigen Schmelzebegleitstoffen Verwendung findet.

Der Regelkreis kann gemäß einer Ausführungsform der Erfindung so mit dem Energiewandler und/oder optional auch mit der Rückspeisevorrichtung verbunden sein (oder nicht verbunden sein), dass durch ihn eine entsprechende Regelung/Steuerung erfolgen kann.

Das erfindungsgemäße Verfahren dient zur Erzeugung eines Granulats aus einer Kunststoffschmelze durch Extrusion. Ein Anwendungsgebiet der Erzeugung von Granulat aus schmelzflüssigen Kunststoffen durch Extrusion gemäß der Erfindung betrifft zum Beispiel die Verwendung eines Unterwasser-Heißabschlagverfahrens oder auch beispielsweise das Erzeugen von Granulatkörner durch Vertropfen von schmelzflüssigen Kunststoffen. Bei dem erfindungsgemäßen Verfahren wird eine Kunststoffschmelze erzeugt, wobei die Kunststoffschmelze mit einem über dem Umgebungsdruck liegenden Druck durch eine Lochplatte in eine mit einem Prozessfluid gefüllte Prozesskammer extrudiert wird. Die aus der Lochplatte extrudierten Stränge der Kunststoffschmelze werden in einzelne Granulatkörner zerteilt, wobei insbesondere bevorzugt eine Zerteilungsvorrichtung Verwendung findet, wobei erfindungsgemäß über eine Fördervorrichtung das Prozessfluid mit einem über dem Umgebungsdruck liegenden Druck in die Prozesskammer zugeführt wird. Stromabwärts der Prozesskammer wird der Druck des Prozessfluids mit den darin enthaltenen Granulatkörnern abgebaut. Erfindungsgemäß wird dem Prozessfluid mit den darin enthaltenen Granulatkörnern zumindest teilweise seine Druckenergie durch einen stromabwärts der Prozesskammer vorgesehenen Energiewandler entzogen, wobei der Druck des Prozessfluids mit den darin enthaltenen Granulatkömem abgebaut wird und dabei die entzogene Energie zumindest teilweise in eine weiter nutzbare Energieform umgewandelt wird.

Die oben im Zusammenhang mit der erfindungsgemäßen Vorrichtung getroffenen Aussagen gelten entsprechend, soweit anwendbar, auch für das erfindungsgemäße Verfahren.

Bei dem erfindungsgemäßen Verfahren kann die entzogene und umgewandelte Energie über eine Rückspeisevorrichtung wieder zur Fördervorrichtung rückgespeist werden, wie ebenfalls oben im Zusammenhang mit der erfindungsgemäßen Vorrichtung bereits erläutert.

Erfindungsgemäß findet eine Vorrichtung zur Erzeugung eines Granulats aus einer Kunststoffschmelze mit den oben geschilderten Merkmalen und/oder ein Verfahrens zur Erzeugung eines Granulats aus einer Kunststoffschmelze mit den oben geschilderten Merkmalen Verwendung in der Verarbeitung einer Kunststoffschmelze mit Schmelzebegleitstoffen, welche ohne ausreichenden, über dem Umgebungsdruck liegenden Druck in einer Schmelzezuführung und/oder in der Prozesskammer ausgasen. Bevorzugt ist die Kunststoffschmelze mit Schmelzebegleitstoffen dabei expandiertes Polystyrol (EPS)-Kunststoffschmelze.

Die Erfindung wird im Folgenden beispielhaft unter Bezugnahme auf die beigefügten Zeichnungen anhand bevorzugter Ausführungsformen näher erläutert werden. Es zeigt dabei:
- Figur 1: eine schematische Ansicht eines Anlagenaufbaus mit einer Vorrichtung gemäß der Erfindung;
- Figur 2a bis c: drei unterschiedliche Ausführungsformen des erfindungs- gemäßen Details A der Figur 1;
- Figur 3a und b: zwei unterschiedliche Ausführungsformen des Details B der Figur 1;
- Figur 4: eine erste Ausführungsform eines erfindungsgemäßen E- nergiewandlers;
- Figur 5: eine zweite Ausführungsform eines erfindungsgemäßen Energiewandlers;
- Figur 6: eine dritten Ausführungsform des erfindungsgemäßen E- nergiewandlers; und
- Figur 7: eine Detailansicht einer Zerteilungsvorrichtung gemäß ei- ner Ausführungsform der Erfindung.

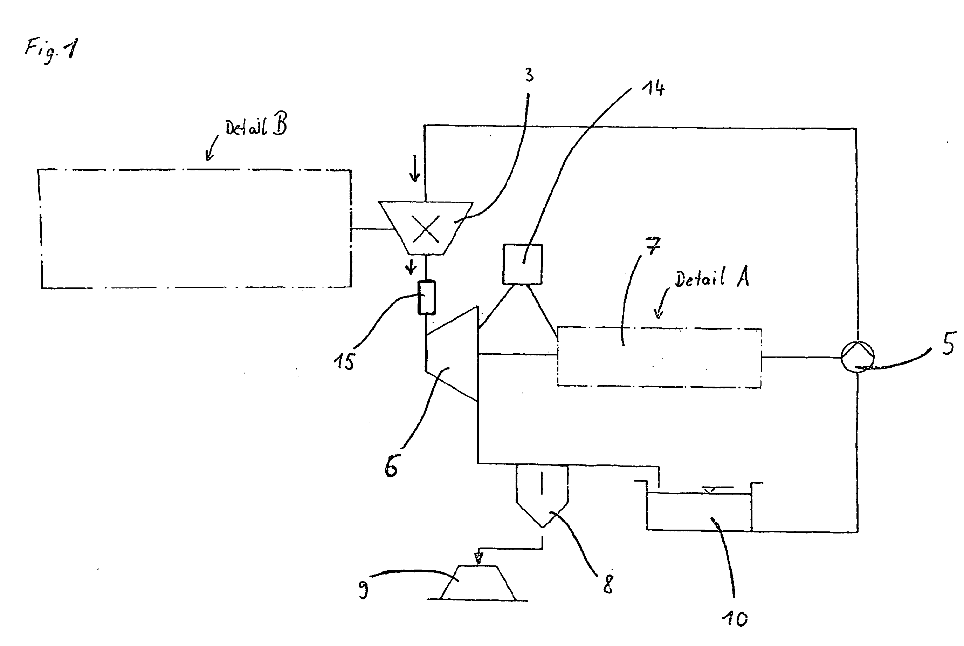

Figur 1 zeigt eine schematische Darstellung eines Anlagenaufbaus mit einer Vorrichtung zur Erzeugung eines Granulats gemäß einer Ausführungsform der Erfindung.

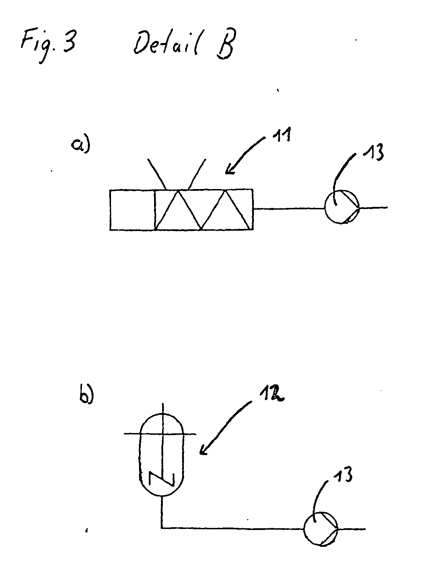

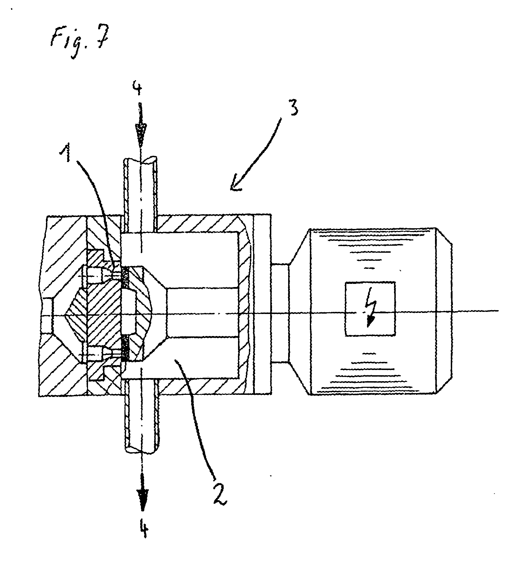

Über eine Kunststoffschmelzezuführung, welche in Figur 1 durch Detail B wiedergegeben wird, wobei Detail B in Figur 3 noch näher erläutert werden wird, wird eine Kunststoffschmelze, welche granuliert werden soll, zu dem Granulierungsort zugeführt, nämlich zu der in Figur 1 mit Bezugszeichen 3 bezeichneten Zerteilungsvorrichtung. Eine Ausführungsform dieser Zerteilungsvorrichtung 3 wird in Figur 7 noch näher erläutert werden. Die von der bzw. in der Zerteilungsvorrichtung 3 in einzelne Granulatkörner zerteilte Kunststoffschmelze befindet sich dann in einem Prozessfluid 4 (in Figur 1 nicht explizit gezeigt), lediglich die Fließrichtung des Prozessfluids ist durch Pfeile angedeutet, wobei das Prozessfluid mit einem über dem Umgebungsdruck liegenden Druck in eine Prozesskammer 2 (in Figur 1 nicht gezeigt) bzw. zu der Zerteilungsvorrichtung 3 von einer stromaufwärts liegenden Fördervorrichtung 5, üblicher Weise einer Pumpe, zugeführt wird. Erfindungsgemäß ist stromabwärts der Prozesskammer bzw. der Zerteilungsvorrichtung 3 ein Energiewandler 6 vorgesehen, welche dem Prozessfluid mit den darin enthaltenen Granulatkömem zumindest teilweise seine Druckenergie entzieht, dabei den Druck des Prozessfluids mit den darin enthaltenen Granulatkömem abbaut und dabei die entzogene Energie zumindest teilweise in eine weiter nutzbare Energieform umwandelt. Der Energiewandler 6 kann bevorzugt eine Turbine, eine Schlauchpumpe mit umgekehrter Energieflussrichtung oder eine Zahnradpumpe mit umgekehrter Energieflussrichtung sein. Erfindungsgemäß kann, wie in der Figur 1 gezeigt; eine Leitung für das Prozessfluid ein Dämpfungselement 15 zum Dämpfen und Ausgleich von. Pulsationen aufweisen, bevorzugt einen Windkessel aufweisen. Nachdem durch den Energiewandler 6 erfindungsgemäß dem Prozessfluid mit den darin enthaltenen Granulatkörnern Druckenergie entzogen wurde, wird das Prozessfluid mit den darin enthaltenen Granulatkörnern einem Abscheider 8 zugeführt, in welchem ein Abscheiden des Prozessfluids von den Granulatkörnern erfolgt. Die Granulatkörner werden dann in ein Lager 9 für abgeschiedenes Granulat ausgegeben. Das Prozessfluid 4 wird in einem Behälter 10 für Prozessfluid aufgefangen und in einen Förderkreislauf zurückgeführt, wobei gemäß Figur 1 die Saugseite der Fördervorrichtung 5 mit dem Behälter 10 in Fluidverbindung steht. Es kann ein Regelkreis 14 vorgesehen sein, mittels welchem der Druck in der Prozesskammer 2 so einstellbar ist, dass dieser Druck etwas oberhalb, bevorzugt knapp oberhalb, des Drucks liegt, bei dem das

Prozessfluid bei der herrschenden Temperatur verdampft und/oder dieser Druck etwas oberhalb, bevorzugt knapp oberhalb, des Drucks liegt, bei dem in der Kunststoffschmelze enthaltene Schmelzebegleitstoffe bei der herrschenden Temperatur verdampfen. Der Regelkreis 14 ist dabei gemäß der in Figur 1 gezeigten Ausführungsform der Erfindung so mit dem Energiewandler 6 und/oder optional mit einer Rückspeisevorrichtung 7 verbunden, dass durch ihn eine entsprechende Regelung/Steuerung erfolgen kann. Detail A in Figur 1 bezeichnet die Rückspeisevorrichtung 7, welche eine Rückspeisung der von dem erfindungsgemäßen Energiewandler 6 weiter nutzbar umgewandelten Energieform zum Betrieb der Vorrichtung, insbesondere zum Antrieb der Fördervorrichtung 5 vorsieht.

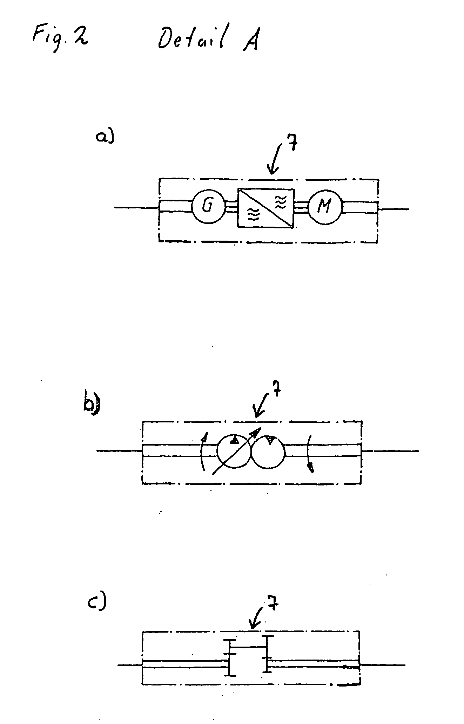

Das Detail A wird nun in den Figuren 2a bis 2c näher erläutert werden.

Die Figuren 2a bis 2c zeigen drei unterschiedliche Ausführungsformen der Rückspeisevorrichtung 7 gemäß Detail A in Figur 1. Mittels der Rückspeisevorrichtung 7 wird die entzogene und umgewandelte Energie wieder zur Fördervorrichtung 5 rückgespeist. Figur 2a zeigt eine Rückspeisevorrichtung 7 mit einer Rückspeisung über ein elektromechanisches Getriebe und mit einem Wechsel-Umrichter. Figur 2b zeigt eine Rückspeisevorrichtung7 mit einem hydraulischen Getriebe. Figur 2c zeigt eine Rückspeisevorrichtung 7 mit einem mechanische Getriebe. Die jeweiligen Antriebsseiten der Rückspeisevorrichtungen 7 sind dabei jeweils an den Energiewandler 6 gekoppelt, die Abtriebsseiten der jeweiligen Rückspeisevorrichtungen 7 sind an die Fördervorrichtung 5 gekoppelt.

Figur 3 zeigt zwei verschiedene Ausführungsformen einer Kunststoffschmelzezufiihrung gemäß Detail B in Figur 1. Figur 3a zeigt eine Kunststoffschmelzezuführung mit einem Extruder 1 mit Antrieb, wobei über eine Schmelzepumpe 13 die Schmelze weiter zu der Verteilungsvorrichtung 3 in Figur 1 zugeführt wird. Figur 3b zeigt einen Reaktor 12, von welchem die Schmelze über eine Schmelzepumpe 13 zu der Zerteilungsvorrichtung 3 der Figur 1 zugeführt wird.

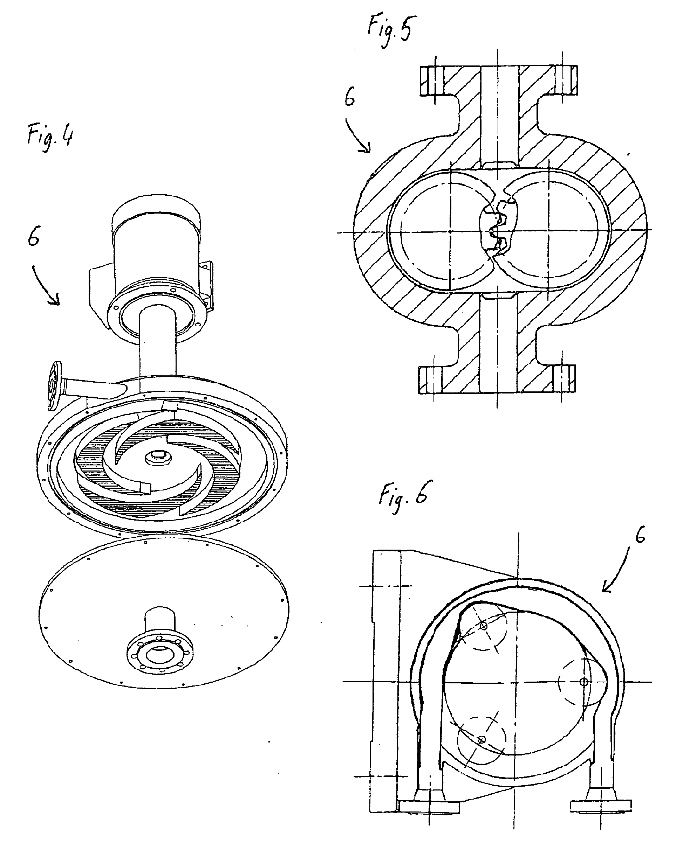

Figur 4 zeigt eine Ausführungsform eines erfindungsgemäßen Energiewandlers 6, welcher als Turbine ausgeführt ist, in einer perspektivischen, teilweise auseinander gezogenen Ansicht. Über einen tangentialen Zulauf wird das Prozessfluid 4 mit den darin enthaltenen Granulatkörnern der Turbine zugeführt. Im Turbinengehäuse befindet sich ein Laufrad mit Laufradflügeln, wobei das Prozessfluid mit den darin enthaltenen Granulatkörnern radial nach innen geführt wird und über einen axialen Ablauf in einem Gehäusedeckel der Turbine abgeführt wird. Beim Durchlaufen der Turbine gemäß Figur 4 gibt das Prozessfluid 4 mit den darin enthaltenen Granulatkörnern Druckenergie durch Impulsübertrag auf die Laufradflügel des Laufrads der Turbine ab, wodurch das Laufrad und somit der Abtrieb der Turbine angetrieben wird, so dass der Druck des Prozessfluids 4 mit den darin enthaltenen Granulatkörnern abgebaut wird und die entzogene Energie erfindungsgemäß zumindest teilweise in eine weiter nutzbare Energieform umgewandelt wird.

Figur 5 zeigt eine weitere bevorzugte Ausführungsform eines Energiewandlers 6 gemäß der Erfindung, nämlich eine Schnittansicht einer Zahnradpumpe. Erfindungsgemäß weist die Zahnradpumpe eine umgekehrte Energieflussrichtung auf, d.h. sie wird eigentlich nicht als Pumpe, sondern der Druck des Prozessfluids mit den darin enthaltenen Granulatkörnern, welches durch die Zahnradpumpe strömt, versetzt diese in Bewegung, wobei die Bewegung, also die Drehbewegung der entsprechenden Zahnräder der Zahnradpumpe, dann weiter nutzbar ist.

Figur 6 zeigt eine weitere bevorzugte Ausführungsform eines erfindungsgemäßen Energiewandlers 6, nämlich eine Schlauchpumpe mit umgekehrter Energieflussrichtung, welche bereits weiter oben beschrieben wurde.

Figur 7 zeigt eine Ausführungsform einer Zerteilungsvorrichtung 3 in einer teilweise geschnittenen Seitenansicht. Über eine Lochplatte 1 wird eine Kunststoffschmelze einer Prozesskammer 2 zugeführt. In die Prozesskammer strömt von oben, in Figur 7 durch einen Pfeil angedeutet, Prozessfluid unter einem Druck zu, welcher über dem Umgebungsdruck liegt. Die Prozesskammer ist vollständig mit Prozessfluid 4 gefüllt. Das Prozessfluid 4 mit den darin enthaltenen Granulatkörnern wird über einen Ablauf aus der Prozesskammer 2 abgeführt. Die Strömungsrichtung des Prozessfluids ist in Figur 7 durch Pfeile dargestellt. Die Zerteilungsvorrichtung 3 weist des Weiteren einen Messerkopf auf, welcher über eine Welle mit einem Elektromotor verbunden ist, dadurch werden die in die Prozesskammer 2 extrudierten Stränge der Kunststoffschmelze in einzelne Granulatkörner zerteilt.

Die erfindungsgemäße Vorrichtung, das erfindungsgemäße Verfahren sowie die entsprechende erfindungsgemäße Verwendung bieten eine einfache und kostengünstige Möglichkeit, sicher und unter allen Betriebsbedingungen eine zuverlässige Granulaterzeugung zu gewährleisten.

## Patentansprüche

1. Vorrichtung zur Erzeugung eines Granulats aus einer Kunststoffschmelze durch Extrusion, aufweisend eine Lochplatte (1), aus welcher die Kunststoffschmelze mit einem über dem Umgebungsdruck liegenden Druck extrudiert wird, eine Prozesskammer (2), in welche die Kunststoffschmelze extrudiert wird, einer Zerteilungsvorrichtung (3) zur Zerteilung von aus der Lochplatte extrudierten Strängen der Kunststoffschmelze in einzelne Granulatkörner, wobei die Prozesskammer (2) mit einem Prozessfluid (4) gefüllt ist, und eine Fördervorrichtung (5), welche das Prozessfluid (4) mit einem über dem Umgebungsdruck liegenden Druck in die Prozesskammer (2) zuführt, wobei stromabwärts der Prozesskammer (2) der Druck des Prozessfluids (4) mit den darin enthaltenen Granulatkömem abgebaut wird, **dadurch gekennzeichnet, dass** stromabwärts der Prozesskammer (2) ein Energiewandler (6) vorgesehen ist, welcher dem Prozessfluid (4) mit den darin enthaltenen Granulatkörnern zumindest teilweise seine Druckenergie entzieht, dabei den Druck des Prozessfluids (4) mit den darin enthaltenen Granulatkörnern abbaut und dabei die entzogene Energie zumindest teilweise in eine weiter nutzbare Energieform umwandelt.

2. Vorrichtung gemäß Anspruch 1, **dadurch gekennzeichnet, dass** der Energiewandler (6) eine Turbine ist.

3. Vorrichtung gemäß Anspruch 1, **dadurch gekennzeichnet, dass** der Energiewandler (6) eine Schlauchpumpe mit umgekehrter Energieflussrichtung ist.

4. Vorrichtung gemäß Anspruch 3, **dadurch gekennzeichnet, dass** eine Leitung für das Prozessfluid ein Dämpfungselement (15) zum Dämpfen und Ausgleich von Pulsationen aufweist, bevorzugt einen Windkessel aufweist.

5. Vorrichtung gemäß Anspruch 1, **dadurch gekennzeichnet, dass** der Energiewandler (6) eine Zahnradpumpe mit umgekehrter Energieflussrichtung ist.

6. Vorrichtung nach einem der Ansprüche 1 bis 5, **dadurch gekennzeichnet, dass** stromabwärts der Prozesskammer (2) im Wesentlichen keine stationäre Verengung eines Strömungsquerschnitts erfolgt.

7. Vorrichtung nach einem der Ansprüche 1 bis 6, **dadurch gekennzeichnet, dass** eine Rückspeisevorrichtung (7) vorgesehen ist, mittels welcher die entzogene und umgewandelte Energie wieder zur Fördervorrichtung (5) rückspeisbar ist.

8. Vorrichtung nach Anspruch 7, **dadurch gekennzeichnet, dass** die Rückspeisevorrichtung (7) eine mechanische, eine elektrische, eine pneumatische oder eine hydraulische Rückspeisung oder eine Kombination davon vorsieht.

9. Vorrichtung nach einem der Ansprüche 1 bis 8, **dadurch gekennzeichnet, dass** ein Regelkreis (14) vorgesehen ist, mittels welchem der Druck in der Prozesskammer (2) so einstellbar ist, dass dieser Druck etwas oberhalb, bevorzugt knapp oberhalb, des Drucks liegt, bei dem das Prozessfluid (4) bei der herrschenden Temperatur verdampft.

10. Vorrichtung nach einem der Ansprüche 1 bis 9, **dadurch gekennzeichnet, dass** ein Regelkreis (14) vorgesehen ist, mittels welchem der Druck in der Prozesskammer (2) so einstellbar ist, dass dieser Druck etwas oberhalb, bevorzugt knapp oberhalb, des Drucks liegt, bei dem in der Kunststoffschmelze enthaltene Schmelzebegleitstoffe bei der herrschenden Temperatur verdampfen.

11. Verfahren zur Erzeugung eines Granulats aus einer Kunststoffschmelze durch Extrusion, wobei eine Kunststoffschmelze erzeugt wird, die Kunststoffschmelze mit einem über dem Umgebungsdruck liegenden Druck durch eine Lochplatte in eine mit einem Prozessfluid gefüllte Prozesskammer extrudiert wird, aus der Lochplatte extrudierte Stränge der Kunststoffschmelze durch eine Zerteilungsvorrichtung in einzelne Granulatkörner zerteilt werden, wobei über eine Fördervorrichtung das Prozessfluid mit einem über dem Umgebungsdruck liegenden Druck in die Prozesskammer zugeführt wird, und stromabwärts der Prozesskammer der Druck des Prozessfluids mit den darin enthaltenen Granulatkömem abgebaut wird, **dadurch gekennzeichnet, dass** dem Prozessfluid mit den darin enthaltenen Granulatkörnern zumindest teilweise seine Druckenergie durch einen stromabwärts der Prozesskammer vorgesehenen Energiewandler entzogen wird, wobei der Druck des Prozessfluids mit den darin enthaltenen Granulatkörnern abgebaut wird und dabei die entzogene Energie zumindest teilweise in eine weiter nutzbare Energieform umgewandelt wird.

12. Verfahren gemäß Anspruch 11, **dadurch gekennzeichnet, dass** die entzogene und umgewandelte Energie über eine Rückspeisevorrichtung wieder zur Fördervorrichtung rückgespeist wird.

13. Verwendung einer Vorrichtung zur Erzeugung eines Granulats aus einer Kunststoffschmelze gemäß einem der Ansprüche 1 bis 10 und/oder eines Verfahrens zur Erzeugung eines Granulats aus einer Kunststoffschmelze gemäß Anspruch 11 oder 12, **dadurch gekennzeichnet, dass** damit eine Kunststoffschmelze mit Schmelzebegleitstoffen verarbeitet wird, welche ohne ausreichenden, über dem Umgebungsdruck liegenden Druck in einer Schmelzezuführung und/oder in der Prozesskammer ausgasen.

14. Verwendung gemäß Anspruch 13, **dadurch gekennzeichnet, dass** die Kunststoffschmelze mit Schmelzebegleitstoffen expandiertes Polystyrol (EPS)-Kunststoffschmelze ist.

## Claims

1. Device for producing granules from a polymer melt by extrusion, having a breaker plate (1), from which the polymer melt is extruded at a pressure above ambient pressure, a process chamber (2), into which the polymer melt is extruded, a breaking-down device (3) for breaking down strands of the polymer melt extruded from the breaker plate into individual granules, the process chamber being filled with a process fluid (4), and a conveying device (5), which feeds the process fluid into the process chamber at a pressure above ambient pressure, wherein downstream of the process chamber the pressure of the process fluid with the granules contained in it is reduced, **characterized in that** downstream of the process chamber (2) an energy converter (6) is provided, which at least partially extracts the compressive energy from the process fluid (4) with the granules contained in it, thereby reduces the pressure of the process fluid with the granules contained in it and thereby converts the extracted energy at least partially into a form of energy that can be put to further use.

2. Device according to claim 1, **characterized in that** the energy transducer (6) is a turbine.

3. Device according to claim 1, **characterized in that** the energy converter (6) is a hose pump with reversed energy flow direction.

4. Device according to claim 3, **characterized in that** a conduit for the process fluid comprises a dampening element (15) for dampening and equalizing pulsation, preferable an air chamber.

5. Device according to claim 1, **characterized in that** the energy converter (6) is a gear pump with reversed energy flow direction.

6. Device according to one of the claims 1 to 5, **characterized in that**, downstream of the process chamber (2) essentially no stationary restriction of the flow diameter is encountered.

7. Device according to one of the claims 1 to 6, **characterized in that** a back feeding device (7) is provided by which the extracted and converted energy is adapted to be again fed back to the conveyer device.

8. Device according to claim 1, **characterized in that** the back feeding device (7) provides a mechanical, electrical, pneumatical or hydraulical feed back or a combination thereof.

9. Device according to one of the claims 1 to 8, **characterized in that** a control circuit (14) is provided by which the pressure in the process chamber (2) is adapted to be adjusted such that this pressure is somewhat above, preferably just above, the pressure at which the process fluid (4) evaporates at the current temperature.

10. Device according to one of the claims 1 to 9, **characterized in that** a control circuit (14) is provided by which the pressure in the process chamber (2) is adapted to be adjusted such that the pressure is somewhat above, preferably just above, the pressure at which the melt supporting additives contained in the polymer melt are evaporating at the current temperature.

11. Method for producing granules from a polymer melt by extrusion whereby a polymer melt is produced, the polymer melt is extruded at a pressure above ambient temperature through a breaker plate into a processing chamber filled with process fluid, the strands of the polymer melt extruded from the breaker plate are broken down by a breaking down-device into individual granulates, wherein the process fluid is fed by means of a conveyer device at a pressure above ambient temperature and, downstream of the process chamber, the pressure of the process fluid with the granulates contained in it, is reduced, **characterized in that** the compressive energy is extracted from the process fluid with the granulates contained in it at least partly by an energy converter provided downstream of the process chamber, whereby the pressure of the process fluid with the granulates contained in it is reduced, and thereby the extracted energy is converted at least partly into a form of energy that can be put to further use.

12. Method according to claim 11, that the extracted and converted energy is fed back again through a back feeding device to the conveyer device.

13. Use of a device for producing granulates from a polymer melt according to one of the claims 1 to 10 and/or a method for producing granulates out of polymer melt according to claim 11 or 12, **characterized in that** a polymer melt comprising melt supporting additives is processed thereby, which are out gassing without sufficient pressure laying above the ambient pressure, in a melt supply means and/or the process chamber.

14. Use according to claim 13, **characterized in that** the polymer melt is a polystyrene (EPS)-polymer melt expanding by means of melt supporting additives.

## Revendications

1. Dispositif pour l'obtention d'un granulat à partir d'une masse fondue de matière plastique par extrusion, présentant une plaque perforée (1), par laquelle la masse fondue de matière plastique est extrudée au moyen d'une pression d'une valeur supérieure à la pression ambiante, une chambre de processus (2), dans laquelle la masse fondue de matière plastique est extrudée, un dispositif de fractionnement (3) pour le fractionnement de brins extrudés de la masse fondue de matière plastique à partir de la plaque perforée en des grains granulés individuels, sachant que la chambre de processus (2) est remplie d'un fluide de processus (4), et un dispositif de transport (5) qui mène le fluide de processus (4) avec une pression d'une valeur supérieure à la pression ambiante dans la chambre de processus (2), sachant qu'en aval de la chambre de processus (2) la pression du liquide de processus (4) avec les grains de granulés contenus à l'intérieur baisse, **caractérisé en ce qu'**en aval de la chambre de processus (2), un transformateur d'énergie (6) est prévu, qui retire au fluide de processus (4) avec les grains de granulés au moins partiellement son énergie de pression, diminue en même temps la pression du fluide de processus (4) avec les grains de granulés contenus à l'intérieur, et transforme en même temps l'énergie retirée au moins partiellement en une forme d'énergie réutilisable.

2. Dispositif selon revendication 1, **caractérisé en ce que** le transformateur d'énergie (6) est une turbine.

3. Dispositif selon revendication 1 **caractérisé en ce que** le transformateur d'énergie (6) est une pompe à tuyau flexible avec un sens inversé de déplacement de l'énergie.

4. Dispositif selon revendication 3 **caractérisé en ce qu'**un conduit pour le fluide de processus présente un élément d'amortissement (15) pour l'amortissement et l'équilibrage de pulsations, de préférence un amortisseur à air.

5. Dispositif selon revendication 1 **caractérisé en ce que** le transformateur d'énergie (6) est une pompe à engrenages avec un sens inversé de déplacement de l'énergie.

6. Dispositif selon l'une des revendications 1 à 5 **caractérisé en ce qu'**en aval de la chambre de processus (2) aucun resserrement stationnaire d'une section de passage de flux n'a essentiellement lieu.

7. Dispositif selon l'une des revendications 1 à 6, **caractérisé en ce qu'**un dispositif de renvoi sur le réseau (7) est prévu, au moyen duquel l'énergie retirée et transformée peut être à nouveau envoyée vers le dispositif de transport (5).

8. Dispositif selon revendication 7 **caractérisé en ce que** le dispositif de renvoi sur le réseau (7) prévoit une récupération mécanique, électrique, pneumatique ou hydraulique, ou une combinaison de celles-ci.

9. Dispositif selon l'une des revendications 1 à 8 **caractérisé en ce qu'**un circuit de régulation (14) est prévu, au moyen duquel la pression dans la chambre de processus (2) est réglable de telle manière que cette pression se trouve un peu au-dessus, de préférence très légèrement au-dessus de la pression à laquelle le fluide de processus (4) amortit à température ambiante.

10. Dispositif selon l'une des revendications 1 à 9, **caractérisé en ce qu'**un circuit de régulation (14) est prévu, au moyen duquel la pression dans la chambre de processus (2) est réglable de telle manière que cette pression se trouve un peu au-dessus de préférence légèrement au-dessus de la pression à laquelle des substances concomitantes de masse fondue contenues dans la masse fondue de matière plastique amortissent à température ambiante.

11. Procédé pour l'obtention d'un granulat à partir d'une masse fondue de matière plastique par extrusion, sachant qu'une masse fondue de matière plastique est obtenue, la masse fondue de matière plastique est extrudée avec une pression supérieure à la pression ambiante par une plaque perforée dans une chambre de processus remplie d'un fluide de processus, les brins de la masse fondue de matière plastique extrudés de la plaque perforée sont fractionnés par un dispositif de fractionnement en des grains de granulés individuels, sachant que le fluide de processus est mené par un dispositif de transport dans la chambre de processus avec une pression supérieure à la pression ambiante et qu'en aval de la chambre de processus la pression du fluide de processus avec les grains de granulés contenus à l'intérieur baisse, **caractérisé en ce qu'**on retire au processus de fluide avec les grains de granulés contenus à l'intérieur au moins partiellement son énergie de pression par un transformateur prévu en aval de la chambre de processus, sachant que la pression du fluide avec les grains de granulés contenus à l'intérieur est diminuée et l'énergie retirée est transformée à ce moment au moins partiellement en une forme d'énergie réutilisable.

12. Procédé selon revendication 11, **caractérisé en ce que** l'énergie retirée et transformée est renvoyée au réseau d'alimentation vers le dispositif de transport par un dispositif de renvoi sur le réseau.

13. Utilisation d'un dispositif pour l'obtention d'un granulat à partir d'une masse fondue de matière plastique selon l'une des revendications 1 à 10 et/ou d'un procédé pour l'obtention d'un granulat à partir d'une masse fondue de matière plastique selon les revendications 11 ou 12, **caractérisés en ce qu'**une masse fondue de matière plastique est ainsi travaillée avec des substances concomitantes de masse fondue, lesquelles effectuent un dégazage sans pression suffisante, supérieure à la pression ambiante dans une amenée de masse fondue et/ou dans la chambre de processus.

14. Utilisation selon revendication 13 **caractérisée en ce que** la masse fondue de matière plastique avec substances concomitantes de masse fondue est une masse fondue de matière plastique de polystyrène (PS).
